(19) Europäisches Patentamt
European Patent Office
Office européen des brevets

(11) Publication number: **0 239 660 B1**

# EUROPEAN PATENT SPECIFICATION

(45) Date of publication of patent specification: **10.07.91**

(51) Int. Cl.⁵: **B65G 15/32**, B65G 39/07, B65D 90/06

(21) Application number: **86104493.1**

(22) Date of filing: **02.04.86**

(54) **Lagging-reinforced structure.**

(43) Date of publication of application:
**07.10.87 Bulletin 87/41**

(45) Publication of the grant of the patent:
**10.07.91 Bulletin 91/28**

(84) Designated Contracting States:
**DE FR GB IT**

(56) References cited:
**DE-A- 2 930 186**

**PATENTS ABSTRACTS OF JAPAN, Volume
10, no. 70, March 19, 1986 (M-462)& JP-A-60
213 604 (KAWAMOTO KOGYO K.K.)
25-10-1985**

(73) Proprietor: **Kawamoto, Masaichi
2-33, Dairihonmachi 2-chome Moji-ku
Kitakyushu-shi Fukuoka(JP)**

(72) Inventor: **Kawamoto, Masaichi
2-33, Dairihonmachi 2-chome Moji-ku
Kitakyushu-shi Fukuoka(JP)**

(74) Representative: **Henkel, Feiler, Hänzel & Partner
Möhlstrasse 37
W-8000 München 80(DE)**

## Description

This invention relates to a lagging-reinforced conveyor belt of the kind defined by the precharacterizing features of the claim.

A lagging-reinforced conveyor belt of this type is known from DE-A-2 930 186. The plate-shaped lagging elements of this known conveyor belt are arranged in series both longitudinally and transversely along the lining layer of the belt with gaps between adjacent lagging elements so as to present a tiled upper surface which provides a certain flexibility of the conveyor belt. These plate-shaped lagging elements, however, are not sufficiently anchored within the lining layer and therefore tend to be easily torn from the surface thereof.

From JP-A-60 213 604 it is known to provide each of the lagging elements of a lagging-reinforced conveyor belt, which lagging elements are embedded in a rubber-made lining layer mounted on a substrate, with a profiled anchoring portion extending from the lower surface of the lagging elements into the material of the lining layer. The profiles used, however, are not in any event, for instance in the case of extreme loads acting on the lagging elements, suited to prevent the tearing of individual plate-like lagging elements from the surface of the lining layer.

It is the object of the present invention to provide a lagging-reinforced conveyor belt of the kind defined by the preamble of the claim having a high resistance to the tearing out of individual lagging elements. This object is achieved by the characterizing features of the claim.

In accordance with the invention a tubular securing element is provided for each lagging element which securing element is optimized for the purpose of high resistance to tearing of indiviudual lagging elements.

Fig. 1 is a partial plan view of the lagging-reinforced conveyor belt according to the invention,

Fig. 2 is a cross-sectional view of the lagging-reinforced conveyor belt taken along the line V-V of Fig. 1, and

Fig. 3 and Fig. 4 are plan and side view of the lagging-reinforced tile-like lagging. conveyor belt of Fig. 1.

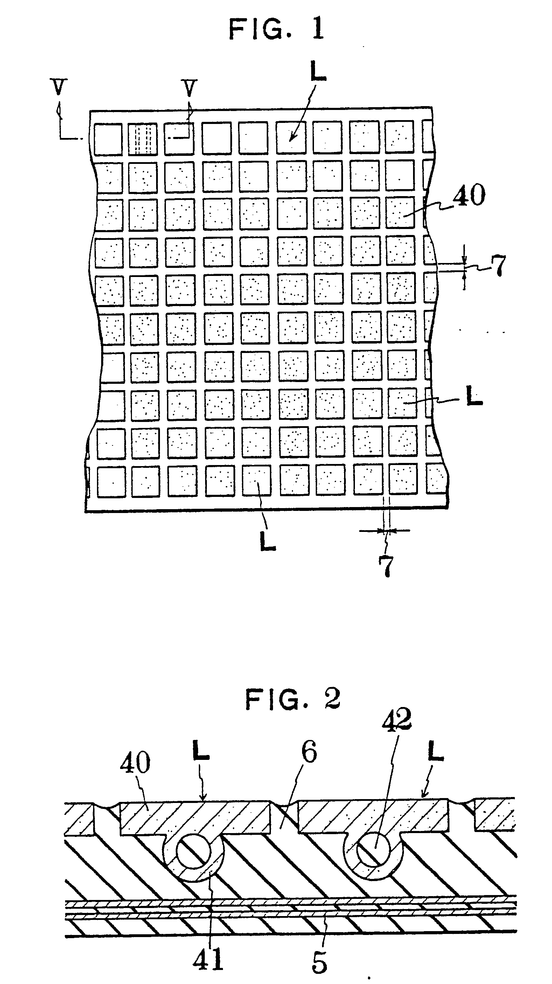

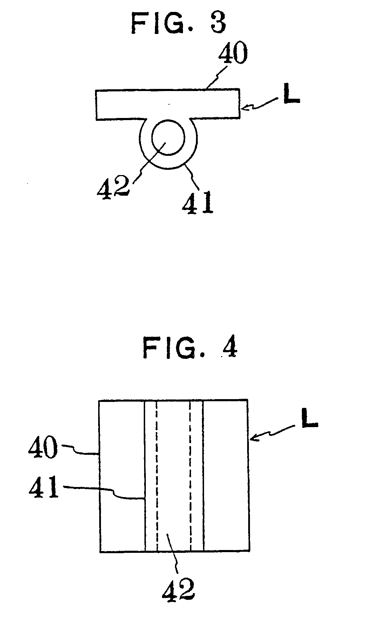

The conveyor belt partially shown in Fig. 1 to 4 comprises a substrate 5 which is made of a textile having high tensile strength and flexibility such as textile or glass fiber textile or carbon fiber textile.

Furthermore, such substrate 5 can be made of a plurality of cords extending in the same direction as the running direction of the conveyor belt 1 and fixedly secured to each other in a transverse direction.

Such cord may be a fiber strip such as nylon or steel strip having a sufficient flexibility and tensile strength.

The upper surface of the substrate 5 is coated with a flat-plate-shaped lining layer 6 and such lining layer 6 is made of rubber which is flexible and resilient.

The lining layer 6 is moulded to the substrate 5.

The laggings L embedded in said layer 6 are made of extremely high wear-resistance ceramics.

Such ceramic laggings L are produced, for example, in such a manner that 80 to 90 % by weight of alumina powder having a particle size of less than 10 $\mu$m is mixed with 20 to 10 % by weight of a bonding agent mainly composed of silica powder to provide a raw material mixture and such mixture is compacted in an elongated-bar-like shape and the compact is sintered under conventional sintering conditions.

Fig. 1 shows the laggings L embedded into the lining 6 of the conveyor belt 1.

As shown in Fig. 2 to Fig 4, the lagging L comprises a flat square plate 40 and a hollow circular anchoring portion 41 which is fixedly secured to the lower surface of the lining layer 6. Since the anchoring portion 41 has a hollow space 42 therein where the lining material intrudes during the lining forming process, the peeling of the tile-like laggings L can be effectively prevented.

Since such tile-like laggings L can form gaps 7 not only in a longitudinal direction but also in a lateral direction, the flexibility of the lagging L relative to the lining layer 5 is enhanced so that the lagging L is not ruptured even when an unexpected load is applied to the laggings L.

## Claims

1. A lagging-reinforced conveyor belt comprising

   a rubber lining layer (6) and

   a plurality of ceramic lagging elements (L) embedded in said lining layer (6), each of said lagging elements (L) comprising a flat square plate (46), said lagging elements (L) being arranged transversely and longitudinally in the lining layer (6) with a gap between each two adjacent lagging elements (L),

   characterized in that

   each lagging element (L) further comprises a hollow, tubular, anchoring portion (42) extending horizontally along and from the lower face of the lagging element, the said anchoring portion being fixedly and integrally secured in the said lining layer (6) so as to be totally embedded in said lining layer (6), said lining layer (6) being moulded on to a substrate (5) made of textiles or cords.

## Revendications

1. Ruban transporteur à armature calorifuge comprenant

    une couche de revêtement de caoutchouc (6) et

    de multiples éléments calorifuges de céramique (L) encastrés dans ladite couche de revêtement (6), chacun desdits éléments calorifuges (L) consistant en un carreau plat carré (46), lesdits éléments calorifuges (L) étant disposés transversalement et longitudinalement dans la couche de revêtement (6) avec un intervalle séparant deux éléments calorifuges voisins (L),

    caractérisé en ce que

    chaque élément calorifuge (L) comprend par ailleurs une partie tubulaire creuse d'ancrage (42) orintée horizontalement le long de la surface inférieure de l'élément calorifuge et en saillie sur cette surface inférieure, ladite partie d'ancrage étant étroitement et intégralement fixée dans ladite couche de revêtement (6) de manière à être totalement noyée dans ladite couche de revêtement (6), ladite couche de revêtement (6) étant moulée sur un substrat (5) constitué de produits textiles ou de cordons.

## Ansprüche

1. Förderband mit Verstärkungseinlage, umfassend

    eine Gummi-Futterschicht (6) und

    eine Anzahl von in die Futterschicht (6) eingebetteten Keramik-Einlageelementen (L), die jeweils eine flache quadratische Platte (46) aufweisen, wobei die Einlageelemente (L) in Quer- und Längsrichtung in der Futterschicht (6) mit einem Spalt oder Zwischenraum zwischen je zwei benachbarten Einlageelementen (L) angeordnet sind,

    dadurch gekennzeichnet, daß

    jedes Einlageelement (L) weiterhin einen hohlen, rohrförmigen Verankerungsabschnitt (42) aufweist, der sich waagerecht längs der Unterseite des Einlageelements erstreckt und von dieser Unterseite absteht, der Verankerungsabschnitt fest und einheitlich in der Futterschicht (6) befestigt oder festgelegt ist, so daß er vollständig in die Futterschicht (6) eingebettet ist, und die Futterschicht (6) auf einen aus Textilmaterial oder Fäden geformten Schichtträger (5) aufgeformt ist.

# FIG. 1

# FIG. 2

4

## FIG. 3

40
L
42
41

## FIG. 4

40
41
42
L